# EUROPEAN PATENT SPECIFICATION

(11) **EP 1 173 492 B1**
(45) Date of publication and mention of the grant of the patent: **23.05.2007**
(21) Application number: 00922165.6
(22) Date of filing: 13.04.2000
(51) Int. Cl.: C08G 18/08, C08G 18/10, C08G 18/65, C08G 18/66, C08G 18/48, C08K 5/42

(54) **POLYURETHANE FILMS AND DISPERSIONS FOR THE PREPARATION THEREOF**
POLYURETHANFILME UND DISPERSIONEN ZU DEREN HERSTELLUNG
FILMS DE POLYURETHANNE ET DISPERSIONS POUR LEUR PREPARATION

(30) Priority: 14.04.1999 US 129271 P
(43) Date of publication of application: 23.01.2002
(73) Proprietor: DOW GLOBAL TECHNOLOGIES INC., Midland, Michigan 48674 (US)
(72) Inventor: PARKS, Franklin, E., Jones Creek, TX 77541 (US); BHATTACHARJEE, Debkumar, Lake Jackson, TX 77566 (US); SANCHEZ, Thelma, C., Lake Jackson, TX 77566 (US)
(74) Representative: Raynor, John
(86) International application number: PCT/US2000/009968
(87) International publication number: WO 2000/061651

(56) References cited:
- WO-A-98/41554
- GB-A- 1 243 604
- US-A- 4 507 413

## Description

This invention relates to polyurethane films and dispersions for the preparation thereof. This invention particularly relates to polyurethane films prepared from aqueous dispersions.

While ostensibly reactive with water, it has long been known that polyisocyanate polymers can be used to prepare aqueous polyurethane dispersions. Polyurethane dispersions are generally prepared by chain extending the reaction product of an organic diisocyanate or polyisocyanate and an organic compound having two or more active hydrogen atoms such as polyalkylene ether glycols, poly(alkylene ether-alkylene thioether) glycols, alkyd resins, polyesters and polyester amides, often using an organic solvent. The diisocyanate is used in stoichiometric excess so that the reaction product, also referred to as a polyurethane/urea/thiourea prepolymer, is isocyanate terminated. Examples of polyurethane prepolymer preparations are described in U.S. Patents Nos. 3,178,310, 3,919,173, 4,442,259, 4,444,976, and 4,742,095, among others.

Polyurethane dispersions are reported as being useful for preparing such diverse materials as: coatings and bonds in U.S. Patent No. 4,292,226; flexible solvent barriers in U.S. Patent No. 4,431,763; adhesives in US 4,433,095; and films in 4,501,852. Films, or rather the process of dipping to make a film, can be a part of the processes for making many articles. Examples of film applications include gloves, organ bags, condoms, ostomy bags, and the like. While it is known that such applications can be made with polyurethane dispersions, conventional polyurethane dispersions have sometimes been found to have insufficient physical or handling properties to make them a preferred material for such applications. Also, the use of a solvent can have adverse effects for some applications.

Polyurethanes are the reaction product of a polyalcohol and a polyisocyanate. Typically, the polyisocyanates used to prepare polyurethane dispersions have been aliphatic isocyanates such are disclosed in US 5,494,960. Aromatic polyisocyanates such as toluene diisocyanate (TDI) and methylene diphenyldiisocyanate (MDI) as well as polymethylene polyphenylisocyanate (PMDI) are also known to be useful.

Films prepared from natural rubber latex are common, yet are considered to have properties which are desirable from the perspective of comfort and utility. Unfortunately, natural rubber latex also includes proteins and other materials which can be irritating to skin.

Accordingly, it would be desirable in the art of preparing polyurethane films from aqueous dispersions, to prepare such films which have physical and handling properties sufficient for their use in conventional film applications. It would be further desirable if such films could be prepared with dispersions which are, in turn, prepared in the absence of organic solvents. It would be yet even more desirable if such films had physical properties similar to natural rubber latex films but which did not include the dermal irritants which occur in natural rubber latex.

In one aspect, the present invention is a polyurethane film comprising a film prepared from a polyurethane dispersion, the dispersion being prepared from a non-ionic polyurethane prepolymer, and the prepolymer being prepared from a polyurethane prepolymer formulation including a diisocyanate and an active hydrogen containing material wherein the active hydrogen- containing material is a mixture of a high molecular weight polyether diol having a molecular weight of 1000 to 4000 and a low molecular weight diol having a molecular weight of 60 to 750 wherein:
the dispersion is formed in a two or more step process wherein
   (1) in a first step the prepolymer is formed and, in a subsequent step,
   (2) an aqueous dispersion of the prepolymer is formed, in the presence of an anionic surfactant, both steps occurring in the absence of an organic solvent,
wherein the diisocyanate is MDI having a p,p' isomer content of from 90 to 99 percent.

In another aspect, the present invention is a process for preparing a polyurethane film comprising the steps of:
(a) preparing a non-ionic polyurethane prepolymer;
(b) dispersing the prepolymer in water in the presence of an anionic surfactant; and then
(c) applying the dispersion to a substrate as a film;
wherein the prepolymer is prepared from a polyurethane prepolymer formulation including a diisocyanate and an active hydrogen containing material wherein the active hydrogen-containing material is a mixture of a high molecular weight polyether diol having a molecular weight of 1000 to 4000 and a low molecular weight diol having a molecular weight of 60 to 750; and
wherein steps (a) and (b) both occur in the absence of an organic solvent, and
wherein the diisocyanate is MDI having a p,p' isomer content of from 90 to 99 percent.

In still another aspect, the present invention is an aqueous polyurethane dispersion useful for preparing polyurethane films comprising the product of dispersing in water a nonionic polyurethane prepolymer prepared from a prepolymer formulation including a diisocyanate and an active hydrogen-containing material wherein the active hydrogen-containing material is a mixture of a high molecular weight polyether diol having a molecular weight of 1000 to 4000 and a low molecular weight diol having a molecular weight of 60 to 750 wherein:
the dispersion is formed in a two or more step process wherein,
   (1) in a first step the prepolymer is formed and, in a subsequent step,
   (2) an aqueous dispersion of the prepolymer is formed, in the presence of an anionic surfactant, both steps occurring in the absence of an organic solvent,
wherein the diisocyanate is MDI having a p,p' isomer content of from 90 to 99 per cent.

The present invention involves a non-ionic prepolymer, external stabilization, and the absence of organic solvents, thereby avoiding many of the handling concerns with the dispersions and films of the prior art. Moreover, the films of the present invention do not include the dermal irritants which occur in natural rubber latex. The films and dispersions of the present invention are thus suitable for use in applications such as, for example, medical applications.

In one embodiment, the present invention is a polyurethane film prepared from a polyurethane dispersion. The dispersions of the present invention can be prepared by any method known to one of ordinary skill in the art of preparing polyurethane dispersions to be useful in making such dispersions subject to the following limitations.

The process of preparing the dispersion includes at least two steps. In a first step, a prepolymer is prepared. In a subsequent step, the prepolymer is dispersed with water. The prepolymer can be dispersed in any way which results in a dispersion which can be used to prepare a film having acceptable physical properties for the anticipated use of the film. The dispersions can be done by a batch process or by a continuous process. If done by a batch process, preferably, the dispersion in done by an inverse phase process wherein a small amount of water, including a small amount of anionic surfactant, is first added to a continuous prepolymer phase and mixed and then more water is added with mixing until the phase inverts.

When dispersions of the present invention are prepared by means of a continuous process, preferably they are prepared by means of a high internal phase ratio (HIPR) process. Such processes are known and are disclosed in, for Example. U.S. Patent No. 5,539,021 to Pate, et al., and WO 98/41552 A1 to Jakubowski, et al. When prepared by either method, the resulting dispersion should have a particle size sufficient to make the dispersion stable. The dispersions of the present invention will have a particle size of from 0.9 to about 0.05, preferably from about 0.5 to about 0.07 and even more preferably, from about 0.4 to about 0.10 micrometers. Most preferably, the particle size of the dispersions of the present invention is about 0.15 micrometers.

The stability of the dispersion is sufficient to prevent the dispersion from coagulating under storage or shipping conditions, but not so stable that the polymer cannot be coagulated onto a substrate to prepare a film. Films are often prepared by methods that include thermal and chemical coagulation. During these processes, a dispersion at the surface of a substrate is destabilized and the polymer coalesces onto the substrate forming a film. If the dispersion is so stable that it cannot be readily coagulated onto the substrate, it is not useful for forming films. On the other hand, if the dispersion is so unstable that it coagulates during storage or on shipping, it is also not useful for forming the films of the present invention. While not a preferred embodiment, the emulsions of the present invention can be used in casting applications where emulsion stability is not at critical.

The polyurethane dispersions of the present invention are prepared from a nonionic polyurethane prepolymer. The nonionic prepolymers of the present invention are prepared with aromatic diisocyanate. The diisocyanate is MDI, having a P,P' isomer content of from 99 percent to 90 percent. Even more preferably, when MDI is used with the formulations of the present invention, it preferably has a P,P' isomer content of from about 98 to about 92 percent. Most preferably, when MDI is used with the formulations of the present invention, it preferably has a P,P' isomer content of about 94 percent. While MDI with such isomer distributions can be prepared by distillation during the MDI process, it can also be prepared by admixing commonly available products such as ISONATE 125M* and ISONATE 500P*. (*ISONATE 125M and ISONATE 500P are trade designations of The Dow Chemical Company.)

The prepolymers of the present invention are prepared from a formulation that includes an active hydrogen containing material. The active hydrogen, containing material is a mixture of diols. One component of the diol mixture is preferably a high molecular weight polyoxypropylene diol having an ethylene oxide capping of from 0 to 25 weight percent. The other component of the diol mixture is a low molecular weight diol. The polyether diols of the formulations of the present invention can be prepared by any method known to those of ordinary skill in the art of preparing polyether polyols to be useful for preparing such diols. Preferably, the polyether diols are prepared by the alkoxylation of a difunctional initiator in the presence of a basic catalyst. For example, a polyether useful with the present invention is a product resulting from a two step alkoxylation of ethylene glycol with first propylene oxide and then ethylene oxide, in the presence of KOH as a catalyst.

The high molecular weight polyether diol component of the diol mixture of the prepolymer formulations of present invention is preferably a polyoxypropylene diol having an ethylene oxide capping of from 0 to 25 weight percent. The molecular weight of this component is from 1,000 to 4,000, more preferably from 1,200 to 2,500, and most preferably from 1,800 to 2,200. As stated, the polyether diol is capped with from 0 to 25 percent ethylene oxide. Preferably, the high molecular weight diol is capped with from 5 to 25 percent ethylene oxide, and more preferably, from 10 to 15 percent ethylene oxide.

The low molecular weight diol component of some of the prepolymer formulations of the present invention can also be a product of alkoxylating a difunctional initiator. Preferably, this component is also a polyoxypropylene diol, but it can also be a mixed ethylene oxide propylene oxide polyol, as long as at least 75 weight percent of the alkoxides used, if present, is propylene oxide. Diols such as propylene glycol, diethylene glycol, dipropylene glycol, can also be used with the formulations of the present invention. The low molecular weight diol component of the prepolymer formulations, has a molecular weight of from 60 to 750, preferably from 62 to 600, and most preferably, from 125 to 500.

The prepolymers of the present invention can be prepared in any way known to those of ordinary skill in the art of preparing polyurethane prepolymers to useful for preparing such prepolymers. Preferably the aromatic diisocyanate and polyether diol mixture are brought together and heated under reaction conditions sufficient to prepare a polyurethane prepolymer. The stoichiometry of the prepolymer formulations of the present invention is such that the diisocyanate is present in excess. Preferably, the prepolymers of the present invention have an isocyanate content (also known as %NCO) of from about 1 to about 9 weight percent, more preferably from 2 to 8 weight percent, and most preferably from 3 to 7 weight percent.

The prepolymers of the present invention are optionally extended with a difunctional amine chain extender. Preferably, the difunctional amine chain extender is present in the water used to make the dispersion when used, the amine chain extender can be any isocyanate reactive diamine or amine having another isocyanate reactive group and a molecular weight of from 60 to 450, but is preferably selected from the group consisting of: an aminated polyether diols; piperazine, aminoethylethanolamine, ethanolamine, ethylenediamine and mixtures thereof. Preferably, the amine chain extender is dissolved in the water used to make the dispersion.

The prepolymers of the present invention are nonionic. There are no ionic groups incorporated in or attached to the backbones of the prepolymers used to prepare the films of the present invention. The anionic surfactant used to prepare the dispersions of the present invention is a external stabilizer and is not incorporated into the polymer backbones of the films of the present invention.

The prepolymers of the present invention are dispersed in water which contains a surfactant. The surfactant is an anionic surfactant. In the practice of preparing the dispersions of the present invention, the surfactant is preferably introduced into water prior to a prepolymer being dispersed therein, but it is not outside the scope of the present invention that the surfactant and prepolymer could be introduced into the water at the same time. Any anionic surfactant can be used with the present invention, but preferably the anionic surfactant is selected from the group consisting of sulfonates, phophates, carboxylates. More preferably, the anionic surfactant is sodium dodecyl benzene sulfonate, sodium dodecyl sulfonate, sodium dodecyl diphenyl oxide disulfonate, sodium n-decyl diphenyl oxide disulfonate, isopropylamine dodecylbenzenesulfonate, or sodium hexyl diphenyl oxide disulfonate, and most preferably, the anionic surfactant is sodium dodecyl benzene sulfonate.

The dispersions of the present invention can have a solids level of from 30 weight percent to 60 weight percent. Films will not necessarily be prepared from dispersions having this level of solids. While the dispersions themselves will be stored and shipped at as high a solids content as possible to minimize storage volume and shipping costs, the dispersions can desirably be diluted prior to final use. The thickness of the film to be prepared and the method of coagulating the polymer onto a substrate will usually dictate what solids level is needed in the dispersion. When preparing films, the dispersions of the present invention can be at a weight percent solids of from 5 to 60 percent, preferably from 10 to 40 percent, and, most preferably, from 15 to 25 weight percent when preparing examination gloves. For other applications, the film thickness and corresponding solids content of the dispersion used can vary.

For many film applications, it is necessary that the polymer used have physical properties similar to the more conventional materials used in those applications. The desired physical properties will depend largely on the end use application. For example, for an exam glove application, the films of the present invention can have a tensile set of less than 5%.

One significant advantage of the films of the present invention over natural latex in applications such as exam gloves is that the films of the present invention have significantly lesser risk of inducing an allergic reaction in those wearing the gloves. Another benefit of films of the present invention is that they can be prepared such that they are self-releasing. In the art of preparing exam gloves, this ability is also known as "powder free" in reference to the fact that such gloves are occasionally prepared and sold with a layer of talcum powder, com starch, or the like, to keep the polymer from adhering to itself, thereby making it easier to put on the gloves.

The films of the present Invention can be made self releasing by Inclusion of a wax in the prepolymer formulation. Preferably the wax is carnauba wax. It is preferable that the wax to be used be selected from those that are not likely to induce an allergic reaction in skin that comes in contact therewith. Therefore, food grade waxes are particularly preferred for this application. When used, the waxes are preferably included in the water used to disperse the prepolymer formulation at a concentration of from 0.1 to 2 weight percent.

In addition to the waxes already mentioned, other additives can be included in the films of the present invention. Any additive which is known to those of ordinary skill in the art of preparing films from dispersion to be useful can be used with the films of the present invention so long as their presence does not degrade the properties of the film so much that the film is no longer fit for its intended purposes. The additives can also be incorporated into the films in any way known to be useful including, but not limited to inclusion in the prepolymer formulation and inclusion in the water used to make the dispersion. For example titanium dioxide is useful for coloring films of the present invention. Other useful additives include calcium carbonate, silicon oxide, defoamers, biocides, carbon particles.

The films of the present invention are advantageously applied to a substrate using techniques which are commonly known, such as salt coagulation, thermal coagulation, casting, electrodeposition, and combinations thereof. Coagulation processes, also commonly referred to as "dipping" processes, are described generally in, for example, Japanese Kokai 2/1/1990, assigned to Dalichi Kogyo Seiyaku K.K., and salt coagulation in particular is generally described in WO 96/08352, assigned to Jackson et al.

Often the shape of the substrate will determine the end use of the film. Substrates can be made from any of the materials commonly used in the art of preparing films. Suitable substrate materials include, for example, metals, porcelain and plastics. Metals include, for example, steel, aluminum, and titanium.

The present invention has applicability in, for example, gloves, condoms, medical bags, angioplasty balloons, medical bellows, face masks, blood pressure cuffs. The present invention also has applicability in parts associated with drug delivery mechanisms, including catheters, medical tubing, gaskets and o-rings. Moreover, the present invention has applicability in many non-medical items, such as, for example, non-medical gloves, swim caps, tool handle grips, industrial caps and plugs, windshield wiper boots, toy balloons, toys, electrical parts, covers and gaskets.

The following examples are for Illustrative purposes only and are not intended to limit the scope of the claimed invention. Percentages are in weight percents unless otherwise stated.

### EXAMPLES

The following materials are used in the examples below:
- Polyether Polyol is a 2000 molecular weight polyoxypropylene diol having 12.5 percent ethylene oxide end capping.
- Low Molecular Weight Diol is a 425 molecular weight all polyoxypropylene diol.
- Polyisocyanate A is MDI having a 4,4' isomer content of 98 percent and an isocyanate equivalent weight of 125.
- Polyisocyanate B is MDI having a 4,4' isomer content of 50 percent and an isocyanate equivalent weight of 125.
- Surfactant is 22 percent solution of sodium dodecyl benzene sulfonate in water.
- Diamine is a 230 molecular weight polyoxypropylene diamine.

### Example 1

A polyurethane prepolymer is prepared by admixing 52.0 parts of Polyether Polyol and 14.7 parts of Low Molecular Weight Diol and then heating the admixture to 50°C. This material is then admixed with 33.3 parts of Polyisocyanate A which has also been warmed to 50°C. A small amount of benzoyl chloride is added to neutralize residual base in the polyols. The admixture is then heated at 70°C for 4 hours and then tested to determine NCO content. The NCO content is 5.75 percent.

A polyurethane dispersion is prepared by admixing 200g of the prepolymer admixed with 13g water and 38g surfactant using a high shear mixer running at about 2500 rpm. Additional water is slowly added until a phase inversion is observed. Additional water is added until the solids content is 40 percent.

A film is then prepared by a coagulation process by heating a steel plate in and oven until it reached a temperature of from 100 to 120°F (38-49°C). The plate is then dipped into a 20 percent solution of calcium nitrate in 1:1 by weight of water and methanol which also included about 1 wt % of a ethoxylated octylphenol surfactant. The plate is then placed into an oven at 230°F (110°C) for approximately 15 minutes to form a very thin film of calcium nitate on the plate. The plate is allowed to cool to 105°F (40°C) and then dipped into the polyurethane dispersion diluted to 23% solids with deionized water and removed (total dwell time is approximately 20 sec). The plate is held for 5 minutes at room temperature to allow the film to generate enough gel strength, followed by leaching in a water bath at 115°F (46°C) for 10 minutes. Both sides of the plate is then sprayed with water at 115°F (40°C) for two additional minutes. The plate is then heated to 230°F (110°C) for 30 minutes and then cooled to ambient temperature. A polyurethane film is peeled from the substrate and tested using ASTM Designation D 412-98a (Die C; overall length = 4.5" (11.4 cm), width of narrow section = 0.25" (0.64 cm), and gauge length = 1.31' (3.33 cm)) Testing results are presented in the table. It is tactilely soft and yet has good physical properties.

### Example 2

A polyurethane dispersion is prepared by dispersing the prepolymer of Example 1 as in Example 1 except that the water added to the dispersion after the phase inversion includes Diamine at a concentration of 0.25 equivalent stoichiometry based on available isocyanate content). The polyurethane dispersion was then diluted to 23% solids and coagulated according to the procedure described in the Example 1.

### Comparative Example 3 and Example 4.

These polyurethane prepolymers are prepared substantially similarly to the procedure in Example 1 except that the prepolymer compositions are changed as indicated in the table, and the prepolymers are reacted with water and surfactant as described in the Example 1. The polyurethane dispersions are then diluted to 23% solids and coagulated according to the procedure described in the Example 1.

### Example 5

A polyurethane prepolymer and dispersion are prepared substantially similarly to Example 4 except that the water added to the dispersion after the phase inversion includes Diamine at a concentration of 0.25 NCO stoichiometry. The polyurethane dispersion was then diluted to 23% solids and coagulated according to the procedure described in the Example 1.

**TABLE**

| EXAMPLE | 1 | 2 | 3 | 4 | 5 |
|---|---|---|---|---|---|
| POLYETHER POLYOL (parts by wt) | 52 | 52 | 53 | 52 | 52 |
| LOW MWT DIOL (parts by wt) | 14.7 | 14.7 | 15 | 14.7 | 14.7 |
| POLYISOCYANATE A (parts by wt) | 33.3 | 33.3 | 17 | 29.1 1 | 29.1 |
| POLYISOCYANATE B (parts by wt) | - | - | 15 | 4.2 | 4.2 |
| %NCO | 5.75 | 5.75 | 5.40 | 5.80 | 5.80 |
| Chain extension | Water | Diamine (0.25 stoichiometry) | Water | Water | Diamine (0.25 stoichiometry) |
| TENSILE (PSI/kPa) | 5830/ 40196 | 4342/29937 | 2604/ 17953 | 4976/ 34308 | 3020/20822 |
| ELONGATION AT BREAK (%) | 644 | 747 | 995 | 672 | 783 |
| STRESS AT 100% ELONGATION (PSI/kPa) | 421/ 2903 | 247/1703 | 173/1193 | 398/2744 | 192/1324 |

## Claims

1. A polyurethane film comprising a film prepared from a polyurethane dispersion, the dispersion being prepared from a non-ionic polyurethane prepolymer, and the prepolymer being prepared from a polyurethane prepolymer formulation including a diisocyanate and an active hydrogen containing material wherein the active hydrogen-containing material is a mixture of a high molecular weight polyether diol having a molecular weight of 1000 to 4000 and a low molecular weight diol having a molecular weight of 60 to 750 wherein:
the dispersion is formed in a two or more step process wherein
(1) in a first step the prepolymer is formed and, in a subsequent step,
(2) an aqueous dispersion of the prepolymer is formed, in the presence of an anionic surfactant, both steps occurring in the absence of an organic solvent,
wherein the diisocyanate is MDI having a p,p' isomer content of from 90 to 99 percent.

2. The polyurethane film according to Claim 1 wherein the high molecular weight polyether diol is a high molecular weight polyoxypropylene diol having an ethylene oxide capping of from 0 to 25 percent.

3. The polyurethane film according to Claim 1 wherein the anionic surfactant is sodium dodecyl benzene sulfonate.

4. The polyurethane film according to Claim 1 wherein the dispersion has a particle size of from 0.9 µm to 0.05 µm.

5. The polyurethane film according to Claim I wherein the dispersion has a solids content of from 5 to 60 weight percent.

6. The film of Claim 1, wherein the film has a shape of a glove, a condom, an angioplasty balloon, a medical bag or catheter.

7. A process for preparing a polyurethane film comprising the steps of:
(a) preparing a non-ionic polyurethane prepolymer;
(b) dispersing the prepolymer in water in the presence of an anionic surfactant; and then
(c) applying the dispersion to a substrate as a film;
wherein the prepolymer is prepared from a polyurethane prepolymer formulation including a diisocyanate and an active hydrogen containing material wherein the active hydrogen-containing material is a mixture of a high molecular weight polyether diol having a molecular weight of 1000 to 4000 and a low molecular weight diol having a molecular weight of 60 to 750; and
wherein steps (a) and (b) both occur in the absence of an organic solvent, and
wherein the diisocyanate is MDI having a p,p' isomer content of from 90 to 99 percent.

8. The process according to Claim 7 wherein step (c) comprises dipping, thermal coagulation, casting, electrodeposition, or a combination thereof.

9. The process of Claim 7 wherein the shape of the substrate is such that the resulting film is in the shape of a glove, condom, angioplasty balloon, medical bag, medical tubing, or catheter.

10. An aqueous polyurethane dispersion useful for preparing polyurethane films comprising the product of dispersing in water a nonionic polyurethane prepolymer prepared from a prepolymer formulation including a diisocyanate and an active hydrogen-containing material wherein the active hydrogen-containing material is a mixture of a high molecular weight polyether diol having a molecular weight of 1000 to 4000 and a low molecular weight diol having a molecular weight of 60 to 750 wherein: the dispersion is formed in a two or more step process wherein,
(1) in a first step the prepolymer is formed and, in a subsequent step,
(2) an aqueous dispersion of the prepolymer is formed , in the presence of an anionic surfactant, both steps occurring in the absence of an organic solvent,
wherein the diisocyanate is MDI having a p,p' isomer content of from 90 to 99 per cent.

11. The dispersion of Claim 10 wherein the high molecular weight polyether diol is a polyoxypropylene diol with an ethylene oxide capping of from 0 to 25 percent.

12. The dispersion of Claim 10, wherein the dispersion has a particle size of from 0.9 µm to 0.05 µm.

13. The dispersion of Claim 10 wherein the dispersion has a solids content of from 5 to 60 weight percent.

## Patentansprüche

1. Polyurethanfilm, umfassend einen aus einer Polyurethandispersion hergestellten Film, wobei die Dispersion aus einem nichtionischen Polyurethanprepolymer hergestellt ist und das Prepolymer aus einer Polyurethanprepolymerformulierung hergestellt ist, umfassend ein Diisocyanat und ein aktivwasserstoff-haltiges Material, wobei das aktivwasserstoff-haltige Material ein Gemisch ist, aus einem hochmolekularen Polyetherdiol, welches ein Molekulargewicht von 1000 bis 4000 aufweist, und einem niedermolekularen Diol, welches ein Molekulargewicht von 60 bis 750 aufweist,
wobei:
die Dispersion in einem zwei- oder mehrstufigen Verfahren gebildet wird, wobei
(1) in einem ersten Schritt das Prepolymer gebildet wird und in einem nachfolgenden Schritt
(2) eine wässrige Dispersion des Prepolymers gebildet wird, in Gegenwart eines anionischen oberflächenaktiven Mittels, wobei beide Schritte in Abwesenheit eines organischen Lösungsmittels stattfinden,
wobei das Diisocyanat MDI ist, welches einen p,p'-Isomergehalt von 90 bis 99 Prozent aufweist.

2. Polyurethanfilm gemäß Anspruch 1, wobei das hochmolekulare Polyetherdiol ein hochmolekulares Polyoxypropylendiol ist, welches eine Ethylenoxidkappe von 0 bis 25 Prozent aufweist.

3. Polyurethanfilm gemäß Anspruch 1, wobei das anionische oberflächenaktive Mittel Natriumdodecylbenzolsulfonat ist.

4. Polyurethanfilm gemäß Anspruch 1, wobei die Dispersion eine Partikelgröße von 0,9 µm bis 0,05 µm aufweist.

5. Polyurethanfilm gemäß Anspruch 1, wobei die Dispersion einen Feststoffgehalt von 5 bis 60 Gewichtsprozent aufweist.

6. Film gemäß Anspruch 1, wobei der Film die Form eines Handschuhs, eines Kondoms, eines Angioplastiballons, eines medizinischen Beutels oder eines Katheters aufweist.

7. Verfahren zur Herstellung eines Polyurethanfilms, umfassend die Schritte:
(a) Herstellen eines nichtionischen Polyurethanprepolymers;
(b) Dispergieren des Prepolymers in Wasser in Gegenwart eines anionischen oberflächenaktiven Mittels; und anschließend
(c) Auftragen der Dispersion auf einem Substrat als Film;
wobei das Prepolymer hergestellt wird aus einer Polyurethanprepolymerformulierung, umfassend ein Diisocyanat und ein aktivwasserstoff-haltiges Material, wobei das aktivwasserstoff-haltige Material ein Gemisch ist, aus einem hochmolekularen Polyetherdiol, welches ein Molekulargewicht von 1000 bis 4000 aufweist, und einem niedermolekularen Diol, welches ein Molekulargewicht von 60 bis 750 aufweist;
und
wobei die Schritte (a) und (b) beide in Abwesenheit eines organischen Lösungsmittels stattfinden und wobei das Diisocyanat MDI ist, welches einen p,p'-Isomergehalt von 90 bis 99 Prozent aufweist.

8. Verfahren gemäß Anspruch 7, wobei der Schritt (c) umfasst Eintauchen, thermisches Koagulieren, Gießen, Elektroabscheiden oder eine Kombination davon.

9. Verfahren nach Anspruch 7, wobei die Form des Substrats dergestalt ist, dass der sich ergebende Film in Form eines Handschuhs, eines Kondoms, eines Angioplastiballons, eines medizinischen Beutels, einer medizinischen Röhre oder eines Katheters ist.

10. Wässrige Polyurethandispersion, welche zur Herstellung von Polyurethanfilmen nützlich ist, umfassend das Produkt aus Dispergieren eines nichtionischen Polyurethanprepolymers in Wasser, hergestellt aus einer Prepolymer-formulierung, umfassend ein Diisocyanat und ein aktivwasserstoff-haltiges Material, wobei das aktivwasserstoff-haltige Material ein Gemisch ist, aus einem hochmolekularen Polyetherdiol, welches ein Molekulargewicht von 1000 bis 4000 aufweist, und einem niedermolekularen Diol, welches ein Molekulargewicht von 60 bis 750 aufweist, wobei die Dispersion in einem zwei-oder mehrstufigen Verfahren gebildet wird, wobei
(1) in einem ersten Schritt das Prepolymer gebildet wird und in einem nachfolgenden Schritt
(2) eine wässrige Dispersion des Prepolymers gebildet wird, in Gegenwart eines anionischen oberflächenaktiven Mittels, wobei beide Schritte in Abwesenheit eines organischen Lösungsmittels stattfinden,
wobei das Diisocyanat MDI ist, welches einen p,p'-Isomergehalt von 90 bis 99 Prozent aufweist.

11. Dispersion gemäß Anspruch 10, wobei das hochmolekulare Polyetherdiol mit ein Polyoxypropylendiol mit einer Ethylenoxidkappe von 0 bis 25 Prozent ist.

12. Dispersion gemäß Anspruch 10, wobei die Dispersion eine Partikelgröße von 0,9 µm bis 0,05 µm aufweist.

13. Dispersion gemäß Anspruch 10, wobei die Dispersion einen Feststoffgehalt von 5 bis 60 Gewichtsprozent aufweist.

## Revendications

1. Film en polyuréthane, comprenant un film préparé à partir d'une dispersion de polyuréthane, laquelle dispersion a été préparée à partir d'un prépolymère polyuréthane non-ionique, lequel prépolymère a été préparé à partir d'une formulation de prépolymère polyuréthane comprenant un diisocyanate et une substance à hydrogène actif, laquelle substance à hydrogène actif est un mélange d'un polyéther-diol à masse moléculaire élevée, dont la masse moléculaire vaut de 1000 à 4000, et d'un diol à faible masse moléculaire, dont la masse moléculaire vaut de 60 à 750, et pour lequel :
la dispersion est formée en un procédé comportant deux étapes ou plus, à savoir :
1) une première étape au cours de laquelle on forme le prépolymère,
2) et une étape ultérieure au cours de laquelle on forme une dispersion aqueuse de ce prépolymère, en présence d'un tensioactif anionique,
ces deux étapes se déroulant en l'absence de solvant organique, et le diisocyanate étant du méthylène-diphényl-diisocyanate (MDI) contenant de 90 à 99 % d'isomère p,p'.

2. Film en polyuréthane, conforme à la revendication 1, pour lequel le polyéther-diol à masse moléculaire élevée est un polyoxypropylène-diol à masse moléculaire élevée et coiffage par oxyde d'éthylène en un taux de 0 à 25 %.

3. Film en polyuréthane, conforme à la revendication 1, pour lequel le tensioactif anionique est du dodécyl-benzène-sulfonate de sodium.

4. Film en polyuréthane, conforme à la revendication 1, pour lequel les particules de la dispersion ont une taille de 0,9 à 0,05 µm.

5. Film en polyuréthane, conforme à la revendication 1, pour lequel la dispersion contient de 5 à 60 % en poids de solides.

6. Film en polyuréthane, conforme à la revendication 1, lequel film possède la forme d'un gant, d'un préservatif, d'un ballonnet pour angioplastie, d'une poche médicale ou d'un cathéter.

7. Procédé de fabrication d'un film en polyuréthane, lequel procédé comporte les étapes suivantes :
a) préparer un prépolymère polyuréthane non-ionique,
b) disperser ce prépolymère dans de l'eau, en présence d'un tensioactif anionique,
c) et appliquer ensuite cette dispersion sur un substrat, en film,
dans lequel procédé le prépolymère est préparé à partir d'une formulation de prépolymère polyuréthane comprenant un diisocyanate et une substance à hydrogène actif, laquelle substance à hydrogène actif est un mélange d'un polyéther-diol à masse moléculaire élevée, dont la masse moléculaire vaut de 1000 à 4000, et d'un diol à faible masse moléculaire, dont la masse moléculaire vaut de 60 à 750,
dans lequel procédé les étapes (a) et (b) se déroulent en l'absence de solvant organique,
et dans lequel procédé le diisocyanate est du méthylène-diphényl-diisocyanate (MDI) contenant de 90 à 99 % d'isomère p,p'.

8. Procédé conforme à la revendication 7, dans lequel l'étape (c) comporte une opération d'immersion, de coagulation thermique, de coulée ou d'électrodépôt, ou une combinaison de telles opérations.

9. Procédé conforme à la revendication 7, dans lequel la forme du substrat est telle que le film résultant possède la forme d'un gant, d'un préservatif, d'un ballonnet pour angioplastie, d'une poche médicale, d'un tube médical ou d'un cathéter.

10. Dispersion aqueuse de polyuréthane, pouvant servir à fabriquer des films en polyuréthane et comprenant le produit d'une opération consistant à disperser dans de l'eau un prépolymère polyuréthane non-ionique, préparé à partir d'une formulation de prépolymère comprenant un diisocyanate et une substance à hydrogène actif, laquelle substance à hydrogène actif est un mélange d'un polyéther-diol à masse moléculaire élevée, dont la masse moléculaire vaut de 1000 à 4000, et d'un diol à faible masse moléculaire, dont la masse moléculaire vaut de 60 à 750,
laquelle dispersion est formée en un procédé comportant deux étapes ou plus, à savoir :
1) une première étape au cours de laquelle on forme le prépolymère,
2) et une étape ultérieure au cours de laquelle on forme une dispersion aqueuse de ce prépolymère, en présence d'un tensioactif anionique,
ces deux étapes se déroulant en l'absence de solvant organique, et le diisocyanate étant du méthylène-diphényl-diisocyanate (MDI) contenant de 90 à 99 % d'isomère p,p'.

11. Dispersion conforme à la revendication 10, dans laquelle le polyéther-diol à masse moléculaire élevée est un polyoxypropylène-diol à coiffage par oxyde d'éthylène en un taux de 0 à 25 %.

12. Dispersion conforme à la revendication 10, laquelle dispersion contient des particules qui ont une taille de 0,9 à 0,05 µm.

13. Dispersion conforme à la revendication 10, laquelle dispersion contient de 5 à 60 % en poids de solides.
